(19) Europäisches Patentamt
European Patent Office
Office européen des brevets

(11) **EP 2 450 408 A1**

(12) **EUROPEAN PATENT APPLICATION**
published in accordance with Art. 153(4) EPC

(43) Date of publication:
**09.05.2012 Bulletin 2012/19**

(21) Application number: **10794118.9**

(22) Date of filing: **28.06.2010**

(51) Int Cl.:
*C08L 79/08* (2006.01)     *C08G 73/10* (2006.01)
*C08K 3/00* (2006.01)

(86) International application number:
**PCT/JP2010/060998**

(87) International publication number:
**WO 2011/001949 (06.01.2011 Gazette 2011/01)**

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**

(30) Priority: **29.06.2009 JP 2009153928**

(71) Applicant: **Ube Industries, Ltd.**
**Ube-shi, Yamaguchi 755-8633 (JP)**

(72) Inventors:
• **NAKAYAMA, Takeshige**
**Ube-shi**
**Yamaguchi 755-8633 (JP)**

• **TAKABAYASHI, Seiichirou**
**Ube-shi**
**Yamaguchi 755-8633 (JP)**
• **NAKAYAMA, Tomonori**
**Ube-shi**
**Yamaguchi 755-8633 (JP)**

(74) Representative: **Cabinet Plasseraud**
**52, rue de la Victoire**
**75440 Paris Cedex 09 (FR)**

(54) **POLYIMIDE PRECURSOR SOLUTION COMPOSITION CONTAINING FILLER, AND POLYIMIDE FILM USING SAME**

(57)     There is provided a filler-containing dispersion solution exhibiting very improved filler dispersion stability by dispersing a filler in a solvent using a polyimide precursor solution composition. Furthermore, in the filler-containing dispersion solution, a tetracarboxylic dianhydride and/or its derivative is reacted with a diamine compound to prepare a filler-containing polyimide precursor solution composition, which is then used to provide a polyimide in which a filler is dispersed.

**EP 2 450 408 A1**

**Description**

TECHNICAL FIELD

The present invention relates to a process for preparing a dispersion solution containing a filler, a polyimide precursor solution composition containing a filler, and a polyimide prepared from a polyimide precursor solution composition containing a filler. In the polyimide precursor solution composition containing a filler, the filler is very stably dispersed and the composition can be used to stably and easily provide a polyimide having excellent electric and mechanical properties. A polyimide film or polyimide material made from the composition can be used for, for example, an electrophotographic copying machine; a fixing belt and an intermediate transfer belt in an electrophotographic image-forming machine such as a printer and a facsimile; and a binder, a coating agent and a collector for a lithium-ion secondary battery.

BACKGROUND ART

Generally, a polyimide has excellent heat resistance and mechanical properties. A polyimide shaped in the form of a film has been suitably used as a flexible insulating substrate and a base material for a heat-resistant tape, and a polyimide shaped in the form of a tube has been suitably used as a belt for carrying heated goods, an electrophotographic fixing belt or an intermediate transfer belt. Moreover, they have been suitably used in a binder, a coating agent and a collector in a lithium-ion secondary battery due to their higher resistance to an electrolytic solution.
In any of these applications, a filler is added to a polyimide precursor solution composition for making the polyimide electrically or thermally conductive.
Patent Document No. 1 has described a dispersion of a polyimide precursor solution composition containing carbon black in which a zwitterionic surfactant is used as a dispersant. For stabilizing the dispersion, the amount of a zwitterionic surfactant must be increased, leading to increase of bubbles in the dispersion. As a result, it causes a problem that a polyimide prepared using the dispersion generate foams during molding, resulting in deterioration in physical properties.
Patent Document No. 2 has described a dispersion of a polyimide precursor solution composition containing carbon black, in which an amino compound is used as a dispersant. This dispersion is unstable due to tendency of carbon black to settle out and aggregate. A polyimide prepared using the dispersion is unstable in terms of mechanical properties, thermal conductivity and resistivity and thus is improper as a belt for a copying machine or the like and less durable as, for example, a binder, a coating agent or a collector for a lithium-ion secondary battery.

PATENT REFERENCES

Patent Document No. 1: Japanese Laid-open Patent Publication No. 2007-146042.
Patent Document No. 2: Japanese Laid-open Patent Publication No. 2007-302769.

PROBLEM TO BE SOLVED BY THE INTENTION

As described above, for example, an attempt to disperse a filler which has high aggregation and sedimentation property and is electrically and thermally conductive such as carbon black in a polyimide precursor solution composition has been unsuccessful due to a large amount of residual or precipitated aggregates, making it difficult to provide a polyimide precursor solution composition in which a filler is very stably dispersed.
An objective of the present invention is to provide a process for preparing a dispersion solution containing a filler in which the filler is very stably dispersed, a polyimide precursor solution composition containing a filler, and a polyimide produced from a polyimide precursor solution composition containing a filler.

MEANS FOR SOLVING PROBLEM

The present invention relates to the following.
1. A filler-containing dispersion solution wherein a filler is dispersed in a solvent using a polyimide precursor solution composition.
2. The filler-containing dispersion solution according to 1, wherein a concentration of the filler is 1 to 7 % by weight to the total weight of the filler-containing dispersion solution.
3. The filler-containing dispersion solution according to 1 or 2, wherein one or more electron- and/or heat-conductive fillers is used as a filler.
4. The filler-containing dispersion solution according to any one of 1 to 3, wherein a concentration of the polyimide precursor in the filler-containing dispersion solution is 50 to 300 % by weight to a filler concentration.

5. A filler-containing polyimide precursor solution composition prepared by dissolving a tetracarboxylic dianhydride and/or its derivative and a diamine compound in a filler-containing dispersion solution according to any one of 1 to 4 and polymerizing them.

6. A polyimide prepared using the filler-containing polyimide precursor solution composition according to 5.

7. A process for manufacturing a polyimide film using a filler-containing polyimide precursor solution composition prepared by dissolving a tetracarboxylic dianhydride and/or its derivative and a diamine compound in a filler-containing dispersion solution, wherein the filler is dispersed in a solvent using a polyimide precursor solution composition to prepare said filler-containing dispersion solution.

8. A process for manufacturing a polyimide in which a filler is dispersed, comprising

mixing a filler and a polyimide precursor solution composition in a solvent to prepare a filler-containing dispersion solution; and

mixing said filler-containing dispersion solution, a solvent, a tetracarboxylic dianhydride and/or its derivative and a diamine compound for initiating a reaction of a tetracarboxylic dianhydride and/or its derivative with a diamine compound to prepare a filler-containing polyimide precursor solution composition.

ADVANTAGE OF THE INTENTION

A dispersion solution containing a filler according to the present invention contains a polyimide precursor solution composition for improving affinity of a solvent with a filler. In this dispersion solution, the filler is coated by a polyimide precursor solution composition. Thus, as described above, the filler is much more excellently and stably dispersed in comparison with the case using a zwitterionic surfactant or an amino compound as a dispersant, so that even after long-term storage, the filler is unlikely to aggregate or settle out. Thus, the filler is homogeneously dispersed in a polyimide precursor solution composition, so that a polyimide prepared using this composition can exhibit stable electric properties and thermal conductivity.

A polyimide produced using a polyimide precursor solution composition containing a filler according to the present invention can be used for, for example, an electrophotographic copying machine; a fixing belt or an intermediate transfer belt in an electrophotographic image-forming machine such as a printer and a facsimile, and a binder, a coating agent, a collector or the like in a lithium-ion secondary battery.

BRIEF DESCRIPTION OF THE DRAWING

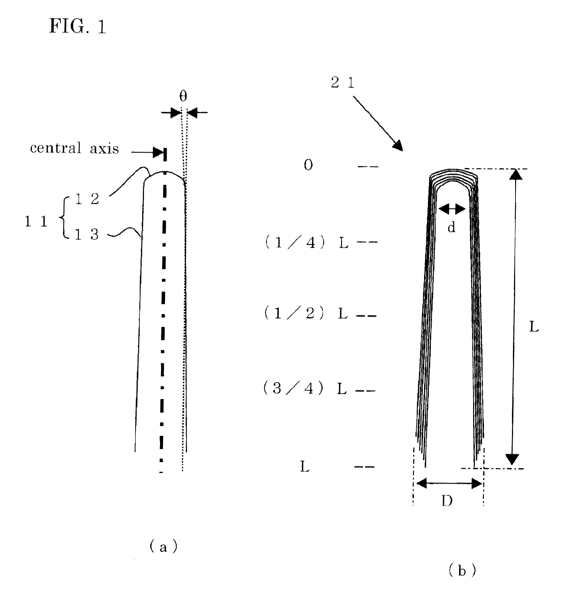

FIG. 1(a) is a drawing schematically showing a minimal structural unit (temple-bell-shaped structural unit) constituting a fine carbon fiber; and FIG. 1(b) is a drawing schematically showing an aggregate consisting of 2 to 30 stacked temple-bell-shaped structural units.

MODE FOR CARRYING OUT THE INVENTION

In accordance with an aspect of the invention, a polyimide is produced by a process comprising

(Step 1) reacting a tetracarboxylic dianhydride and/or its derivative with a diamine compound in a solvent to prepare a polyimide precursor solution composition;

(Step 2) mixing the polyimide precursor composition prepared in Step 1 with a filler and a solvent to prepare a filler-containing dispersion;

(Step 3) mixing the filler-containing dispersion prepared in Step 2 with a solvent and a tetracarboxylic dianhydride and/or its derivative and a diamine compound for reacting the tetracarboxylic dianhydride and/or its derivative with the diamine compound to prepare a filler-containing polyimide precursor solution composition; and

(Step 4) imidizing the polyimide precursor in the filler-containing polyimide precursor solution composition prepared in Step 3 to prepare a polyimide in which the filler is dispersed.

Polyimide precursor solution composition before adding a filler

In Step 1 described above, a tetracarboxylic dianhydride and/or its derivative is reacted with a diamine compound in the presence of a solvent to prepare a polyimide precursor solution composition. This polyimide precursor solution composition may be a concept containing a solvent used.

A polyimide precursor solution composition can be prepared, suitably employing a process and conditions well-known in the art.

Specific examples of a tetracarboxylic dianhydride include pyromellitic dianhydride (PMDA), 3,3',4,4'-benzophenonetetracarboxylic dianhydride, 3,3',4,4'-biphenyltetracarboxylic dianhydride (s-BPDA), 2,3,3'.4'-biphenyltetracarboxylic dianhydride (a-BPDA), 2,3,6,7-naphthalcnctet.racarboxylic dianhydride, 1,2,5,6-naphthalenetetracarboxylic dianhydride, 1,4,5,8-naphthalenetetracarboxylic dianhydride, 2,2'-bis(3,4-dicarboxyphenyl)propane dianhydride, bis(3,4-dicarboxyphcnyl)sulfone dianhydride, perylenete-3,4,9,10-tetracarboxylic dianhydride bis(3,4-dicarboxyphenyl)ether dianhydride, ethylenetetracarboxylic dianhydride, ethyleneglycol bisanhydrotrimellitate, 1,3,3a,4,5,9b-hexahydro-5(tetrahydro-2,5-dioxo-3-furanyl)naphtho[1,2.c]furan. 1,3-dione and 1,2,3,4-butanetetracarboxylic dianhydride. Particularly preferably, 3,3',4,4'-biphenyltetracarboxylic dianhydride (s-BPDA) is used. These can be used alone or in combination of two or more.

Examples of a diamine compound include 4,4'-diaminodiphenyl ether, 4,4'-diaminodiphenylmethane, 3,3'-diaminodiphenylmethane. 3,3'-dichlorobenzidine, 4,4'-diaminodiphenyl sulfide, 3,3'-diaminodiphenyl sulfone, 1,5-diaminonaphthalene, m-phenylenediamine, p-phenylenediamine, 3,3'-dimethyl-4,4'-biphenyldiamine, benzidine, 3,3'-dimethylbenzidine, 3,3'-dimethoxybenzidine, 4,4'-diaminodiphenyl sulfone, 4,4'-diaminodiphenylpropane, 2,4-diaminotoluene, bis(4-amino-3-carboxyphenyl)methane, 1,3-bis(4-aminophenoxy)benzene. 1,4-bis(4-aminophenoxy)benzene, 2,2-bis[4-(4-(4-aminophenoxy)phenyl]propane, bis[4-(4-aminophenoxy)phenyl] sulfone, 2,4-bis($\beta$-amino-tert-butyl)toluene, bis(p-$\beta$-amino-tert-butylphenyl) ether, bis(p-$\beta$-methyl-6-aminopbenyl)benzene, bis-p-(1,1-dimethyl-5-amino-pentyl)benzene, 1-isopropyl-2,4-m-phenylenediamine, m-xylylenediamine, p-xylylenediamine, di(p-aminocyclohexyl)methane, hexamethylenediamine, heptamethylenediamine, octamethylenediamine, nonamethylenediamine, decamethylenediamine, diaminopropyltetramethylene, 3-methylheptamethylenediamine, 4,4-dimetlrylheptamethylenediamine, 2,11-diaminododecane, 1,2-bis-3-aminopropoxyethane, 2,2-dimethylpropylenediamine, 3-methaxyhexamethylenediamine, 2,5-dimethylhexamethylenediamine, 2,5-dimethylheptamethylenediamine, 3-methylheptamethylenediamine, 5-methylnonamethylenediamine, 2,17-diaminoeicosadecane, 1,4-diaminocyclohexane, 1,10-diamina-1,10-dimethyldecane, 1,12-diaminooctadecane and 2,2-bis[4-(4-aminophenoxy)phenyl]propane. Particularly preferably, 4,4'-diaminodiphonyl ether (ODA), p-phenylonediamine (PPD), bis(4-amino-3-carboxyphenyl)methane (MBAA) or 2,2-bis[4-(4-aminophenoxy)phenyl]propane (BAPP) is used. These can be used alone or in combination of two or more.

Examples of a combination of a tetracarboxylic dianhydride and/or its derivative and a diamine compound include 3,3',4,4'-biphenyltetracarboxylic dianhydride (s-BPDA) and 4,4'-diaminodiphenyl ether (ODA), and s-BPDA and p-phenylenediamine (PPD).

A solvent used for preparing a polyimide precursor solution composition is preferably an organic polar solvent having a boiling point of 300 ˚C or lower at an ambient pressure, which can dissolve the polyimide precursor solution composition. Examples include solvents containing an intramolecular nitrogen atom such as N,N-dimethylacetamide, N,N-diethylacetamide, N,N-dimethylformamide, N,N-diethylformamide, N-methyl-2-pyrrolidone, 1,3-dimethyl-2-imidazolidinone and N-methyleaprolactam; solvents containing an intramolecular sulfur atom such as dimethyl sulfoxide, diethyl sulfoxide, dimethyl sulfone, diethyl sulfone and hexamethylsulfonamide; phenolic solvents such as cresol, phenol and xylenol: solvents containing an intramolecular oxygen atom such as diethy leneglycol dimethyl ether (diglyme), triethyleneglycol dimethyl ether (triglyme) and tetraethyleneglycol dimethyl ether (tetraglyme); and other solvents such as acetone, dimethylimidazoline, methanol, ethanol, ethyleneglycol, dioxane, tetrahydrofuran, pyridine and tetraethylurea. Particularly preferably, N-methyl-2-pyrrolidone (NMP) or N,N-dimethylacetamide (DMAc) is used. These solvents can be used alone or in combination of two or more.

In Step 1, a tetracarboxylic dianhydride and/or its derivative and a diamine compound are added to a solvent in a predetermined composition ratio and the mixture is stirred to prepare a polyimide precursor solution composition. The total amount of a tetracarboxylic dianhydride and/or its derivative and a diamine compound in a solvent can be determined depending on a variety of conditions, and is, in general, preferably 5 to 30 % by weight to the total amount of a reaction solution. There are no particular restrictions to the reaction conditions during stirring these materials, but a reaction temperature is preferably adjusted to 80 ˚C or lower, particularly 5 to 50 ˚C. At a too lower reaction temperature, the reaction does not proceed or takes a much time for proceeding, while at a too higher reaction temperature, imidization occurs, and thus both cases are disadvantageous. A reaction time is preferably 1 to 100 hours.

Filler-containing dispersion solution

The term "filler-containing dispersion solution" as used herein means a solution in which a filler is dispersed in a mixture of a solvent and the above-mentioned polyimide precursor solution composition before adding a filler.

Suitable examples of a filler added in Step 2 for imparting electron conductivity include electrically conductive or semiconductive fine particles including metals or alloys such as carbon fiber, carbon black, graphite, aluminum and a copper alloy; and metal oxides such as tin oxide, zinc oxide, potassium titanate and complex oxides including tin oxide-indium oxide or tin oxide-antimony oxide. These electrical conducting materials can be used alone or in combination of two or more. Here, carbon black suitably contains volatiles in about 1 to 25 % by weight, preferably about 3 to 15 % by weight. Examples of carbon black include acetylene black, furnace black , Ketjen Black and channel black.

Furthermore, specific suitable examples include "AMC" (Ube Industries, Ltd.), "Ketjen Black EC-300JD" (Lion Corporation, pH 9.0, Volatiles: 0.5 % by weight), "Ketjen Black EC-600JD" (Lion Corporation, pH 9.0, Volatiles: 0.7 % by weight), "Printex 150T" (Degussa AG, pH 4.5, Volatiles: 10.0 % by weight), "Special Black 350" (Degussa AG, pH 3.5, Volatiles: 2.2 % by weight), "Special Black 100" (Degussa AG, pH 3.3, Volatiles: 2.2 % by weight), "Special Black 250" (Degussa AG, pH 3.1. Volatiles: 2.0 % by weight), "Special Black 5" (Degussa AG, pH 3.0, Volatiles: 15.0 % by weight), "Special Black 4" (Degussa AG, pH 3.0, Volatiles: 14.0 % by weight), "Special Black 4A" (Degussa AG, pH 3.0, Volatiles: 14.0 % by weight), "Special Black 550" (Degussa AG. pH 2.8, Volatiles: 2.5 % by weight), "Special Black 6" (Degussa AG, pH 2.5. Volatiles: 18.0 % by weight), "Color Black FW200" (Degussa AG, pH 2.5, Volatiles: 20.0 % by weight), "Color Black FW2" (Degussa AG, pH 2.5, Volatiles: 16.5 % by weight), "Color Black FW2V" (Degussa AG, pH 2.5, Volatiles: 16.5 % by weight), "MONARCH1000" (Cabot Corporation, pH 2.5, Volatiles: 9.5 % by weight), "MONARCH1300" (Cabot Corporation, pH 2.5, Volatiles: 9.5 % by weight), "MONARCH1400" (Cabot Corporation, pH 2.5, Volatiles: 9.0 % by weight), "MOGUL-L"' (Cabot Corporation, pH 2.5, Volatiles: 5.0 % by weight), and "REGAL400R" (Cabot Corporation, pH 4.0, Volatiles: 3.5 % by weight).

"AMC" (Ube Industries, Ltd.) described above is a carbon fiber as described below.

"AMC" has a temple-bell-shaped structure as shown in FIG. 1(a) as a minimal structural unit. A temple bell is commonly found in Japanese temples, which has a relatively cylindrical-shaped body-part, which is different from a Christmas bell that is very close to cone-shape. As shown in FIG. 1(a), a structural unit 11 has a head-top part 12 and a body-part 13 having an open end like a temple bell and approximately has a shape as a body of rotation formed by rotation about a central axis. The structural unit 11 is constituted by a graphite-net plane consisting solely of carbon atoms, and the circumference of the open-end of the body-part is the open end of the graphite-net plane.

The body-part 13 is gradually enlarged toward the open-end side, and as a result, the generatrix of the body-part 13 is slightly oblique to the central axis of the temple-bell-shaped structural unit and an angle formed θ by these is less than 15 ˚, more preferably 1 ˚ < θ < 15 ˚, further preferably 2 ˚ < θ < 10 ˚. With an excessively large θ, a fine fiber constituting from the structural units has a structure like a fish bone carbon fiber, leading to deterioration in conductivity in a fiber axis direction. On the other hand, with a smaller θ, it has a structure like a cylindrical tube and thus the open end of the graphite-net plane constituting the body-part in the structural unit are less exposed in the outer circumference surface of the fiber, leading to deterioration in conductivity between adjacent fibers.

"AMC" has defects and irregular disturbances, but when its shape is observed as a whole neglecting such irregularity, it can be the that it has a temple-bell-shaped structure where the body-part 13 is gradually enlarged toward the open end side. In terms of "AMC", the above description does not mean that θ is within the above range in all parts, but means that when the structural unit 11 is observed as a whole neglecting defects and irregular parts, θ generally is within the above range. Therefore, in determination of θ, it is preferable to eliminate an area near the head-top part 12 where a thickness of the body-part irregularly varies. More specifically, for example, when a length of a temple-bell-shaped structural unit aggregate 21 (see, the description below) is "L" as shown in FIG. 1(b), θ may be measured at three points (1/4)L, (1/2)L and (3/4)L from the head-top part side and an average of the measured values is determined and the average may be regarded as θ for the whole structural unit 11. "L" is ideally measured in a straight line, but actually, the body-part 13 is often curved, and therefore, it can be measured along the curve in the body-part 13 to give a substantially more real value.

When produced as "AMC", the head-top part has a shape which is smoothly connected to the body-part and convexly curved to the upper side (in the figure). A length of the head-top part is typically about "D" (see FIG. 1(b)) or less, sometimes about "d" (see FIG. 1(b)) or less, wherein "D" and "d" will be described for a temple-bell-shaped structural unit aggregate.

Furthermore, as described later, active nitrogen is not used as a starting material, so that other atoms such as nitrogen are not contained in the graphite-net plane of the temple-bell-shaped structural unit. Thus, the fiber exhibits excellent crystallinity.

In "AMC", as shown in FIG. 1(b), 2 to 30 of such temple-bell-shaped structural units are stacked sharing a central axis, to form a temple-bell-shaped structural unit aggregate 21 (hereinafter, sometimes simply referred to as an "aggregate"). The stack number is preferably 2 to 25, more preferably 2 to 15.

Process for manufacturing "AMC"

First, a process for manufacturing "AMC" is as follows. Using a catalyst which is an oxide of cobalt having a spinel type crystal structure containing magnesium by substitution forming solid solution, vapor phase growth is conducted supplying a mixed gas containing CO and $H_2$ to the catalyst particles to produce "AMC".

A spinel type crystal structure of cobalt where Mg is substituted forming solid solution is represented by $Mg_xCO_{3-x}O_y$. In this formula, x is a number indicating substitution of Co by Mg, and nominally, 0 < x < 3. Furthermore, y is a number selected such that electric charge of the whole formula becomes neutral, and is formally a number of 4 or less. That is, a spinel-type oxide of cobalt $CO_3O_4$ contains divalent and trivalent Co ions, and when divalent and trivalent cobalt ions are represented by $Co^{II}$ and $Co^{III}$, respectively, a cobalt oxide having a spinel type crystal structure is represented by $Co^{II}Co^{III}_2O_4$. Both sites of $Co^{II}$ and $Co^{III}$ are substituted by Mg to form a solid solution. After the solid solution formation by substitution with Mg for $Co^{III}$, electric charge is kept to be neutral and thus y is less than 4. However, both x and y have a value within a range that a spinel type crystal structure can be maintained.

For the use as a catalyst, a solid solution range of Mg represented by x is preferably 0.5 to 1.5, more preferably 0.7 to 1.5. A solid solution amount as x of less than 0.5 results in poor catalyst activity, leading to production of a fine carbon fiber in a lower yield. If x is more than 1.5, it is difficult to produce a spinel type crystal structure.

A spinel-type oxide crystal structure of the catalyst can be confirmed by XRD, and a crystal lattice constant "a" (cubic system) is within the range of 0.811 to 0.818 nm, more preferably 0.812 to 0.818 nm. If' "a" is small, substitutional solid solution formation with Mg is inadequate and catalyst activity is low. The above spinel-type oxide crystal having a lattice constant larger than 0.818 nm is difficult to produce.

We suppose that such a catalyst is suitable because solid solution formation by substitution with magnesium in the spinel structure oxide of cobalt provides a crystal structure as if cobalt is dispersedly placed in magnesium matrix, so that under the reaction conditions, aggregation of cobalt is inhibited.

A particle size of the catalyst can be selected as appropriate and for example, is 0.1 to 100 $\mu$m, preferably 0.1 to 10 $\mu$m as a median diameter.

Catalyst particles are generally placed on an appropriate support such as a substrate or a catalyst bed by an appropriate application method such as spraying, for use. Spraying catalyst particles on a substrate or catalyst bed can be conducted by directly spraying the catalyst particles or spraying a suspension of the particles in a solvent such as ethanol and then drying it to spray a desired amount.

It is also preferable that catalyst particles are activated before being reacted with a source gas. Activation is generally conducted by heating under a gas atmosphere containing $H_2$ or CO. Such activation can be conducted by diluting the above gas with an inert gas such as He and $N_2$ as necessary. A temperature at which activation is conducted is preferably 400 to 600 ˚C, more preferably 450 to 550 ˚C.

There are no particular restrictions to a reactor for vapor phase growth, which can be conducted using a reactor such as a fixed-bed reactor and a fluidized-bed reactor.

A mixed gas containing CO and $H_2$ is used as a source gas to be a carbon source in vapor-phase growth.

An addition concentration of $H_2$ gas $\{(H_2/(H_2+CO)\}$ is preferably 0.1 to 30 vol%, more preferably 2 to 20 vol%. When the addition concentration is too low, cylindrical graphite net planes form a carbon-nanotube-like structure parallel to a fiber axis. On the other hand, if it is more than 30 vol%, the angle of the temple-bell-shaped structure oblique to the fiber axis of a carbon side peripheral surface becomes larger and similar to a fish-bone shape, leading to lower conductivity in a fiber direction.

The source gas can contain an inert gas. Examples of such an inert gas include $CO_2$ $N_2$, He and Ar. The inert gas is preferably contained in such an amount that it does not significantly reduce a reaction rate; for example, 80 vol% or less, preferably 50 vol% or less. Furthermore, a synthetic gas containing $H_2$ and CO or a waste gas such as a steel converter exhaust gas can be, as necessary, used after appropriate treatment.

A reaction temperature for conducting vapor-phase growth is preferably 400 to 650 ˚C, more preferably 500 to 600 ˚C. If a reaction temperature is too low, a fiber does not grow. On the other hand, if a reaction temperature is too high, an yield is reduced. A reaction time is, but not limited to, for example, 2 hours or more and about 12 hours or less.

In terms of a reaction pressure, vapar-phase growth can be conducted at an ambient pressure from the viewpoint of convenience of a reactor or operation, but as long as carbon growth of Boudouard equilibrium proceeds, the reaction can be conducted under the pressurized or reduced-pressure condition.

Although a process of forming the bonding part unique to the fine carbon fiber prepared by this manufacturing process for "AMC" is not clearly understood, it is speculated that balance between exothermic Boudouard equilibrium and heat removal by source-gas flowing causes variation of a temperature near the fine cobalt particles formed from the catalyst, so that carbon growth intermittently proceeds, resulting in formation of the bonding part. In other words, it is speculated that four processes: [1] formation of a head-top part of a temple-bell-shaped structure, [2] growth of a body-part in the temple-bell-shaped structure, [3] pause of growth due to temperature increase caused by the processes [1] and [2], and [4] cooling by a flowing gas, are repeated on fine catalyst particles, to form the bonding part unique to "AMC".

In the present invention, silica, boron nitride, silicon nitride or alumina can be suitably added as a filler for imparting thermal conductivity.

In the present invention, a filler can be dispersed in a mixture of a solvent and a polyimide precursor solution composition by a known method, and the method is suitable in which a filler, a solvent and a polyimide precursor composition before adding a filler are processed by, for example, a three-roll mill, a bead mill, a ball mill, a sand mill, a basket mill or ultrasound to disperse a filler in a mixture.

A solvent added in Step 2 can be selected from those listed above as a solvent which can be used in Step 1. Particularly, a solvent in Step 2 is preferably identical to a solvent used in Step 1.

A concentration of a filler to the total amount of a filler-containing dispersion solution is suitably about 1 to 7 % by weight. If a filler is added in a too small amount, the filler tends to settle out or aggregate. If a filler is added in a too large amount, a filler dispersion becomes so viscous that the filler cannot be dispersed.

A concentration of a polyimide precursor in a filler-containing dispersion solution is suitably 50 to 300 % by weight to a filler concentration. If a concentration of a polyimide precursor is too low, a filler tends to settle out or aggregate. If a concentration of a polyimide precursor is too high, a filler dispersion becomes so viscous that the filler cannot be dispersed.

Filler-containing polyimide precursor solution composition

The term, "filler-containing polyimide precursor solution composition" as used herein means a composition prepared by dissolving a tetracarboxylic dianhydride and/or its derivative and a diamine compound in the filler-containing dispersion solution described above and then polymerizing them to give a polyimide precursor.

A monomer concentration in the polymerization reaction in Step 3, that is, the total concentration of a tetracarboxylic dianhydride and/or its derivative added to a solvent and diamine compound, can be determined, depending on a variety of conditions, and, in general, is preferably about 5 to 30 % by weight to the total amount of a reaction solution. If the concentration is too low, a tetracarboxylic dianhydride and/or its derivative and diamine compound are less reactive, so that the reaction takes much time or the amount of a solvent to be removed during film forming is increased, which is economically disadvantageous. If the concentration is too high, viscosity during polymerization becomes high or a problem of precipitation arises. A reaction temperature is preferably adjusted to 80 ˚C or less, particularly 5 to 50 ˚C. If a reaction temperature is too low, the reaction does not proceed or the reaction takes too much time. If a reaction temperature is too high, problems such as imidization occur. A reaction time is preferably 1 to 100 hours.

A tetracarboxylic dianhydride and/or its derivative and a diamine compound added in Step 3 can be as described above. These can be identical to or different from the compounds used in Step 1.

A solvent added in Step 3 can be selected from those listed as a solvent which can be used in Step 1. In particular, a solvent in this step is preferably identical to that used in Step 1.

A concentration of a filler-containing polyimide precursor prepared in Step 3 is preferably 5 to 30 % by weight, further preferably 10 to 25 % by weight.

Polyimide in which a filler is dispersed

In Step 4, a polyimide precursor in a filler-containing polyimide precursor solution composition prepared in Step 3 can be imidized to provide a polyimide in which a filler is dispersed. There are no particular restrictions to a method for imidization, and any known method can be employed.

For example, a polyimide film in which a filler is dispersed can be provided by applying a filler-containing polyimide precursor solution composition prepared in Step 3 to the surface of a substrate to form a film (coating) and heating the film to remove a solvent.

There are no particular restrictions to a shape or a material for a substrate used herein as long as it has a dense structure such that it can prevent penetration of a liquid or gas. Suitable examples include substrates for film formation which are known per se and commonly used for forming a film, such as a belt, a mold and a roll; electronic components and electric wires such as a circuit board on which a polyimide film is formed as an insulating protective film; sliding components and products on which a coating is formed; and a film or copper foil used in forming a multilayer film or copper-clad laminate substrate by forming a polyimide film.

A polyimide precursor solution composition can be applied on a substrate by an appropriate known method such as spraying, roll coating, spin coating, bar coating, ink-jet printing, screen printing and slit coating.

A film made of a polyimide precursor solution composition formed by applying the composition on the substrate can be defoamed by, for example, heating at a relatively lower temperature such as room temperature or low under a reduced or an ambient pressure.

The film made of a polyimide precursor solution composition formed on the substrate can be heated for removing a solvent and for initiating imidization, to give a polyimide film. Suitably, the heating is conducted, instead of rapid heating at a high temperature, initially at a relatively lower temperature of 140 ˚C or lower for removing a solvent and then rising a temperature to the maximum heating temperature for imidization. The maximum heating temperature can be in the range of 200 to 600 ˚C, and more preferably, the film can be heated at a temperature in the range of 250 to 450 ˚C to suitably provide a polyimide film with a film thickness of 0.1 to 200 $\mu$m, preferably 3 to 150 $\mu$m, more preferably 5 to 130 $\mu$m. If a heating temperature is lower than 250 ˚C, imidization inadequately proceeds and if the temperature is higher than 450 ˚C, problems such as deterioration in mechanical properties occur due to, for example, thermal decomposition. Furthermore, if a film thickness is larger than 200 $\mu$m, a solvent is inadequately evaporated, which may result in the problems such as deterioration in mechanical properties and foaming during heating.

A concentration of a filler in a polyimide film prepared from a filler-containing polyimide precursor solution composition is suitably, but not limited to, about 3 to 30 % by weight to the weight of the polyimide. If a filler concentration is too low, addition of the filler is ineffective and if a filler concentration is too large, mechanical properties of a resulting polyimide are significantly deteriorated.

A polyimide precursor solution composition (including a filler-containing polyimide precursor solution composition) of the present invention can be shaped into a tube by rotational molding, and then defoamed and heated as described above to easily provide an endless tubular polyimide film. For example, in rotational molding, a cylindrical mold, which also works as a substrate, is rotated while the surface (inner or outer) of the mold is coated by a polyimide precursor solution composition, and a solvent in the coating is evaporated by heating at a relatively lower temperature of 200 ˚C or lower to form a self-supporting film (a state where a coating is not fluidized after removing a solvent, that is, polymerization and imidization has, but not completely, proceeded). Next, the self-supporting film as it is or, if necessary, after peeling off from the substrate, reversing or being under a proper tension, heated in a manner that it is directly or stepwise heated to the maximum heating temperature, to suitably provide an endless tubular polyimide film. Herein, the maximum heating temperature can be in the range of 200 to 600 ˚C, preferably 250 to 450 ˚C, more preferably 300 to 450 ˚C, further preferably 340 to 450 ˚C. If the film is heated at a temperature of lower than 200 ˚C, imidization inadequately proceeds so that satisfactory mechanical strength cannot be achieved, and if the film is heated at a temperature of higher than 450 ˚C., the film becomes brittle, leading to deterioration in mechanical properties.

EXAMPLES

There will be described Examples of the present invention and also Comparative Examples. The present invention is, however, not limited to Examples below.

First, there will be described abbreviations of compounds and measuring methods used in Examples and Comparative Examples.

Abbreviations of compounds

s-BPDA: 3,3',4,4'-biphenyltetracarboxylic dianhydride;
ODA: oxydianiline (4,4'-diaminodiphenyl ether);
PPD. p-phenylenediamine;
BAPP: 2,2-bis[4-(4-aminophenoxy)phenyl]propane;
MBAA: bis(4-amino-3-carboxyphenyl)methane;
NMP: N-methyl-2-pyrolidone:
DMAc: N,N-dimethylacetamide;
PVP: polyvinylpyrrolidone

Measuring method of tensile strength at break

Measured in accordance with ASTM D882 using a tensile tester (Orientec Co., Ltd., RTC-1225A).

Measuring method of tensile elongation at break

Measured in accordance with ASTM D882 using a tensile tester (Orientec Co., Ltd., RTC-1225A).

Measuring method of tensile modulus

Measured in accordance with ASTM D882 using a tensile tester (Orientec Co., Ltd., RTC-1225A).

Measuring method of surface and volume resistivity

Measured in accordance with JIS K 7194 using a 4-pin probe (MCP-TP03P) connected to Loresta GP (Mitsubishi Chemical Corporation).

Solid concentration

A polyimide-converted solid concentration in a polyimide precursor solution composition is determined from the following equation by drying a polyimide precursor solution composition at 350 ˚C for 30 min and measuring a pre-drying weight W1 and a post-drying weight W2.
$$\text{Solid concentration (\% by weight)} = \{(W1\text{-}W2)/W1\} \times 100$$

Solution viscosity

A solution viscosity at 30 ˚C. was measured using a viscometer (Tokimec Inc., type E).

Solution stability

A filler-containing polyimide precursor solution composition was stored in an atmosphere regulated at 25 ˚C. and a sample after 1 month was evaluated as ○ when a solution viscosity change was within ± 10 % or as x when a solution viscosity change was beyond ± 10 %.

Evaluation of dispersibility

An aggregate size of a filler-containing polyimide precursor solution composition was observed by a grind meter line method.

Dispersion stability (observation of re-aggregation)

A filler-containing polyimide precursor solution composition was stored in an atmosphere regulated at 25 ˚C and an aggregate after 1 month was observed by a grind meter line method.

Dispersion stability (observation of filler settling)

A filler-containing polyimide precursor solution composition was allowed to stand in an atmosphere regulated at 25 ˚C for 14 days. Solid concentrations in the upper and the lower parts were measured and the sample was evaluated as ○ when a solid concentration difference was within ± 5 % or x when a solid concentration difference was beyond ± 5 %.

Example 1

(1-a) Preparation of a polyimide precursor solution composition before adding a filler

In a glass reaction vessel with an internal volume of 500 mL equipped with a stirrer and an inlet and an outlet tubes for nitrogen gas, 400 g of NMP as a solvent was added and then 40.50 g (0.202 mol) of ODA and 59.50 g (0.202 mol) of s-BPDA were added, and the mixture was stirred at 50 ˚C. for 10 hours to give a polyimide precursor solution composition with a solid concentration of 18.2 % by weight and a solution viscosity of 51.0 Pa ·s.

(1-b) Method for preparing a filler-containing dispersion solution

To 745 g of NMP, 30 g of Ketjen Black (Lion Corporation, Ketjen Black ECP-600JD, Volatiles: 0.7 % by weight) and 225 g of the polyimide precursor solution composition prepared in (1-a) were added, and the mixture was mixed at room temperature for 16 hours using a ball mill (combination of balls with a diameter of 2 mm and 6 mm), to prepare a dispersion solution containing carbon black (3 % by weight carbon dispersion).

(1-c) Method for preparing a filler-containing polyimide precursor solution composition

To a glass reaction vessel with an internal volume of 500 mL equipped with a stirrer and an inlet and an outlet tubes for nitrogen gas, 166.7 g of 3 % by weight carbon dispersion described above and 275.8 g of NMP were added, and then 37.46 g of ODA (total: 0.202 mol) and 55.04 g of s-BPDA (total: 0.202 mol) were added. The mixture was stirred at 50 ˚C for 10 hours to give a polyimide precursor solution composition containing carbon black in an amount of 5 % by weight to the total amount of the polyimide precursor solution composition. The polyimide precursor solution composition containing 5 % by weight of carbon black had 19.2 % by weight of a solid concentration, 50.5 Pa ·s of a solution viscosity and solution stability evaluated as ○.

An initial aggregate had a size of 10 μm and an aggregate after 1 month had a size of 12 μm, and re-aggregation was not observed. After standing for additional 14 days, dispersion stability was evaluated as (see Table 1).

(1-d) Method for preparing a filler-containin polyimide film

The polyimide precursor solution composition containing 5 % by weight of carbon black was applied on a glass plate as a substrate by a bar coater. The coating was defoamed and pre-dried at 25 ˚C for 30 min, and then placed in a hot-air dryer under an ambient pressure and a nitrogen gas atmosphere and sequentially heated at 120 ˚C for 60 min, at 150 ˚C for 30 min, at 200 ˚C for 10 min, at 250 ˚C for 10 min and at 400 ˚C for 10 min, to form a polyimide film with a thickness of 50 μm.

The results such as properties of this polyimide film are shown in Table 1.

Example 2

(2-a) Preparation of a polyimide precursor solution composition before adding a filler

Prepared as described in (1-a), to give a polyimide precursor solution composition with a solid concentration of 18.3 % by weight and a solution viscosity of 50.8 Pa ·s.

(2-b) Preparation of a filler-containing dispersion solution

A filler-containing dispersion solution was prepared as described in (1-b) using the polyimide precursor solution composition prepared in (2-a) (3 % by weight carbon dispersion).

(2-c) Method for prepaying a filler-containing polyimide precursor solution composition

To a glass reaction vessel with an internal volume of 500 mL equipped with a stirrer and an inlet and an outlet tubes for nitrogen gas. 333.3 g of 3 % by weight carbon dispersion described above and 151.7 g of NMP were added, and then 34.42 g of ODA (total: 0.202 mol) and 50.58 g of s-BPDA (total: 0.202 mol) were added. The mixture was stirred at 50 ˚C for 10 hours to give a polyimide precursor solution composition containing carbon black in an amount of 10 % by weight to the total amount of the polyimide precursor solution composition. The properties of this polyimide precursor solution composition are shown in Table 1.

(2-d) Method for preparing a filler-containing polyimide film

Using the polyimide precursor solution composition prepared in (2-c), a polyimide film was formed as described in (1-d). The results such as the properties of this polyimide film are shown in Table 1.

Example 3

(3-a) Preparation of a polyimide precursor solution composition before addilng a filler

Prepared as described in (1-a) substituting 400 g of DMAc for NMP as a solvent, to give a polyimide precursor solution composition with a solid concentration of 17.9 % by weight and a solution viscosity of 50.5 Pa ·s.

(3-b) Method for preparing a filler-containing dispersion solution

Prepared as described in (1-b) using the polyimide precursor solution composition prepared in (3-a), substituting 745 g of DMAc for NMP as a solvent (3 % by weight carbon dispersion).

(3-c) Method for preparing a filler-containing polyimide precursor solution composition

To a glass reaction vessel with an internal volume of 500 mL equipped with a stirrer and an inlet and an outlet tubes for nitrogen gas, 333.3 g of 3 % by weight carbon dispersion described above and 151.7 g of DMAc were added, and then 34.42 g of ODA (total: 0.202 mol) and 50.58 g of s-BPDA (total: 0.202 mol) were added. The mixture was stirred at 50 ˚C. for 10 hours to give a polyimide precursor solution composition containing carbon black in an amount of 10 % by weight to the total amount of the polyimide precursor solution composition. The properties of this polyimide precursor solution composition are shown in Table 1.

(3-d) Method for preparing a filler-containing polyimide film

Using the polyimide precursor solution composition prepared in (3-c), a polyimide film was formed as described in (1-d). The results such as the properties of this polyimide film are shown in Table 1.

Example 4

(4-a) Preparation of a polyimide precursor solution composition before adding a filler

Prepared as described in (1-a), to give a polyimide precursor solution composition with a solid concentration of 18.3 % by weight and a solution viscosity of 51.2 Pa ·s.

(4-b) Preparation of a filler-containing dispersion solution

A filler-containing dispersion solution was prepared as described in (1-b) using the polyimide precursor solution composition prepared in (4-a) (3 % by weight carbon dispersion).

(4-c) Method for preparing a filler-containing polyimide precursor solution composition

To a glass reaction vessel with an internal volume of 500 mL equipped with a stirrer and an inlet and an outlet tubes for nitrogen gas, 333.3 g of 3 % by weight carbon dispersion described above and 151.7 g of NMP were added, and then 31.39 g of ODA (total: 0.202 mol) and 46.11 g of s-BPDA (total: 0.202 mol) were added. The mixture was stirred at 50 ˚C for 10 hours to give a polyimide precursor solution composition containing carbon black in an amount of 15 % by weight to the total amount of the polyimide precursor solution composition. The properties of this polyimide precursor solution composition are shown in Table 1.

(4-d) Method for preparing a filler-containing polyimide film

Using the polyimide precursor solution composition prepared in (4-c), a polyimide film was formed as described in (1-d). The results such as the properties of this polyimide film are shown in Table 1.

Example 5

(5-a) Preparation of a polyimide precursor solution composition before adding a filler

Prepared as described in (1-a), to give a polyimide precursor solution composition with a solid concentration of 18.0 % by weight and a solution viscosity of 50.2 Pa -s.

(5-b) Method for preparing a filler-containing dispersion solution

Prepared as described in (1-b) using the polyimide precursor solution composition prepared in (5-a), substituting 30 g of AMC (Ube Industries, Ltd.) for Ketjen Black as a filler (3 % by weight carbon fiber dispersion).

(5-c) Method for preparing a filler-containing polyimide precursor solution composition

To a glass reaction vessel with an internal volume of 500 mL equipped with a stirrer and an inlet and an outlet tubes for nitrogen gas, 166.7 g of 3 % by weight carbon fiber dispersion described above and 275.8 g of NMP were added, and then 37.46 g of ODA (total: 0.202 mol) and 55.04 g of s-BPDA (total: 0.202 mol) were added. The mixture was stirred at 50 ˚C for 10 hours to give a polyimide precursor solution composition containing carbon fiber in an amount of 5 % by weight to the total amount of the polyimide precursor solution composition. The properties of this polyimide precursor solution composition are shown in Table 1.

(5-d) Method for prepaying a filler-containing polyimide film

Using the polyimide precursor solution composition prepared in (5-c), a polyimide film was formed as described in (1-d). The results such as the properties of this polyimide film are shown in Table 1.

Example 6

(6-a) Preparation of a polyimide precursor solution composition before adding a filler

Prepared as described in (1-a) to give a polyimide precursor solution composition with a solid concentration of 18.3 % by weight and a solution viscosity of 50.8 Pa ·s.

(6-b) Preparation of a filler-containing dispersion solution

A filler-containing dispersion solution was prepared as described in (5-b) using the polyimide precursor solution composition prepared in (6-a) (3 % by weight carbon fiber dispersion).

(6-c) Method for preparing a filler-containing polyimide precursor solution composition

To a glass reaction vessel with an internal volume of 500 mL equipped with a stirrer and an inlet and an outlet tubes for nitrogen gas, 333.3 g of 3 % by weight carbon fiber dispersion described above and 151.7 g of NMP were added, and then 34.42 g of ODA (total: 0.202 mol) and 50.58 g of s-BPDA (total: 0.202 mol) were added. The mixture was stirred at 50 ˚C. for 10 hours to give a polyimide precursor solution composition containing carbon fiber in an amount of 10 % by weight to the total amount of the polyimide precursor solution composition. The properties of this polyimide precursor solution composition are shown in Table 1.

(6-d) Method for preparing a filler-containing polyimide film

Using the polyimide precursor solution composition prepared in (6-c), a polyimide film was formed as described in (1-d). The results such as the properties of this polyimide film are shown in Table 1.

Example 7

(7-a) Preparation of a polyimide precursor solution composition before adding a filler

Prepared as described in (1-a) to give a polyimide precursor solution composition with a solid concentration of 18.2 % by weight and a solution viscosity of 50.1 Pa ·s.

(7-b) Method for preparing a filler-containing dispersion solution

Prepared as described in (1-b) using the polyimide precursor solution composition prepared in (7-a), substituting 30 g of furnace black (Degussa AG, Special Black 4, pH 3.0, Volatiles: 14.0 % by weight) for Ketjen Black as a filler (3 % by weight carbon dispersion).

(7-c) Method for preparing a filler-containing polyimide precursor solution composition

To a glass reaction vessel with an internal volume of 500 mL equipped with a stirrer and an inlet and an outlet tubes for nitrogen gas, 333.3 g of 3 % by weight carbon dispersion described above and 151.7 g of NMP were added, and then 34.42 g of ODA (total: 0.202 mol) and 50.58 g of s-BPDA (total: 0.202 mol) were added. The mixture was stirred at 50 ˚C for 10 hours to give a polyimide precursor solution composition containing carbon black in an amount of 10 % by weight to the total amount of the polyimide precursor solution composition. The properties of this polyimide precursor solution composition are shown in Table 1.

(7-d) Method for preparing a filler-containing polyimide film

Using the polyimide precursor solution composition prepared in (7-c), a polyimide film was formed as described in (1-d). The results such as the properties of this polyimide film are shown in Table 1.

Example 8

(8-a) Preparation of a polyimide precursor solution composition before adding a filler

Prepared as described in (1-a), to give a polyimide precursor solution composition with a solid concentration of 18.4 % by weight and a solution viscosity of 51.4 Pa ·s.

(8-b) Method for preparing a filler-containing dispersion solution

Prepared as described in (1-b) using the polyimide precursor solution composition prepared in (8-a), substituting 30 g of boron nitride (Denki Kagaku Kogyo K.K., SP-2, average particle size: 4 $\mu$m) for Ketjen Black as a filler (3 % by weight boron nitride dispersion).

(8-c) Method for preparing_a_filler-containing polyimide precursor solution composition

To a glass reaction vessel with an internal volume of 500 mL equipped with a stirrer and an inlet and an outlet tubes for nitrogen gas, 333.3 g of 3 % by weight boron nitride dispersion described above and 151.7 g of NMP were added, and then 34.42 g of ODA (total: 0.202 mol) and 50.58 g of s-BPDA (total: 0.202 mol) were added. The mixture was stirred at 50 ˚C for 10 hours to give a polyimide precursor solution composition containing boron nitride in an amount of 10 % by weight to the total amount of the polyimide precursor solution composition. The properties of this polyimide precursor solution composition are shown in Table 1.

(8-d) Method for preparing a filler-cantaining polyimide film

Using the polyimide precursor solution composition prepared in (8-c), a polyimide film was formed as described in (1-d). The results such as the properties of this polyimide film are shown in Table 1.

Example_9

(9-a) Preparation of a polyimide precursor solution composition before adding a filler

Prepared as described in (1-a), to give a polyimide precursor solution composition with a solid concentration of 18.2 % by weight and a solution viscosity of 50.8 Pa ·s.

(9-b) Method for preparing a filler- containing dispersion solution

Prepared as described in (1-b) using the polyimide precursor solution composition prepared in (9-a), substituting 30 g of silica (Denki Kagaku Kogyo K.K., UFP-80, average particle size: 34 nm) for Ketjen Black as a filler(3 % by weight silica dispersion).

(9-c) Method for preparing a filler-containing polyimide precursor solution composition

To a glass reaction vessel with an internal volume of 500 mL equipped with a stirrer and an inlet and an outlet tubes for nitrogen gas, 333.3 g of 3 % by weight silica dispersion described above and 151.7 g of NMP were added, and then 34.42 g of ODA (total: 0.202 mol) and 50.58 g of s-BPDA (total: 0.202 mol) were added. The mixture was stirred at 50 ˚C for 10 hours to give a polyimide precursor solution composition containing silica in an amount of 10 % by weight to the total amount of the polyimide precursor solution composition. The properties of this polyimide precursor solution composition are shown in Table 2.

(9-d) Method for preparing a filler-containing polyimide film

Using the polyimide precursor solution composition prepared in (9-c), a polyimide film was formed as described in (1-d). The results such as the properties of this polyimide film are shown in Table 2.

Example 10

(10-a) Preparation of a polyimide precursor solution composition before adding a filler

To a glass reaction vessel with an internal volume of 500 mL equipped with a stirrer and an inlet and an outlet tubes for nitrogen gas, 400 g of NMP as a solvent was added, and then 26.88 g of PPD (0.249 mol) and 73.12 g of s-BPDA (0.249 mol) were added. The mixture was stirred at 50 °C for 10 hours to give a polyimide precursor solution composition with a solid concentration of 18.0 % by weight and a solution viscosity of 49.7 Pa ·s.

(10-b) Preparation of a filler-containing dispersion solution

A filler-containing dispersion solution was prepared as described in (1-b) using the polyimide precursor solution composition prepared in (10-a) (3 % by weight carbon dispersion solution).

(10-c) Method for preparing a filler-containing polyimide precursor solution composition

To a glass reaction vessel with an internal volume of 500 mL equipped with a stirrer and an inlet and an outlet tubes for nitrogen gas, 333.3 g of 3 % by weight carbon dispersion described above and 151.7 g of NMP were added, and then 36.45 g of ODA (0.182 mol) and 60.86 g of s-BPDA (total: 0.207 mol) were added. The mixture was stirred at 50 °C for 10 hours to give a polyimide precursor solution composition containing carbon black in an amount of 10 % by weight to the total amount of the polyimide precursor solution composition. The properties of this polyimide precursor solution composition are shown in Table 2.

(10-d) Method for preparing a filler-containing polyimide film

Using the polyimide precursor solution composition prepared in (10-c), a polyimide film was formed as described in (1-d). The results such as the properties of this polyimide film are shown in Table 2.

Example 11

(11-a Preparation of a polyimide precursor solution composition before adding a filler

To a glass reaction vessel with an internal volume of 500 mL equipped with a stirrer and an inlet and an outlet tubes for nitrogen gas, 400 g of DMAc as a solvent was added, and then 26.88 g of PPD (0.249 mol) and 73.12 g af s-BPDA (0.249 mol) were added. The mixture was stirred at 50 °C for 10 hours to give a polyimide precursor solution composition with a solid concentration of 18.0 % by weight and a solution viscosity of 49.7 Pa ·s.

(11-b) Preparation of a filler-containing dispersion solution

A filler-containing dispersion solution was prepared as described in (3-b) using the polyimide precursor solution composition prepared in (11-a) (3 % by weight carbon dispersion solution).

(11-c) Method for preparing a filler-containing polyimide precursor solution composition

To a glass reaction vessel with an internal volume of 500 mL equipped with a stirrer and an inlet and an outlet tubes for nitrogen gas, 333.3 g of 3 % by weight carbon dispersion described above and 151.7 g of DMAc were added, and then 36.45 g of ODA (0.182 mol) and 60.86 g of s-BPDA (total: 0.207 mol) were added. The mixture was stirred at 50 °C for 10 hours to give a polyimide precursor solution composition containing carbon black in an amount of 10 % by weight to the total amount of the polyimide precursor solution composition. The properties of this polyimide precursor solution composition are shown in Table 2.

(11-d) Method for preparing a filler-containing polyimide film

Using the polyimide precursor solution composition prepared in (11-c), a polyimide film was formed as described in (1-d). The results such as the properties of this polyimide film are shown in Table 2.

Example 12

(12-a) Preparation of a polyimide precursor solution composition before adding a filler

Prepared as described in (3-a), to give a polyimide precursor solution composition with a solid concentration of 17.9 % by weight and a solution viscosity of 50.5 Pa ·s.

(12-b) Method for preparing a filler-containing dispersion solution

To 895 g of DMAc, 30 g of Ketjen Black (Lion Corporation, Ketjen Black ECP-600JD, Volatiles: 0.7 % by weight) and 75 g of the polyimide precursor solution composition prepared as described above were added, and the mixture was mixed at room temperature for 16 hours using a ball mill (combination of balls with a diameter of 2 mm and 6 mm), to prepare a dispersion solution containing carbon black (3 % by weight carbon dispersion).

(12-c) Method for preparing a filler-containing polyimide precursor solution composition

To a glass reaction vessel with an internal volume of 500 mL equipped with a stirrer and an inlet and an outlet tubes for nitrogen gas, 333.3 g of 3 % by weight carbon dispersion described above and 83.0 g of DMAc were added, and then 39.89 g of ODA (total: 0.202 mol) and 58.61 g of s-BPDA (total: 0.202 mol) were added. The mixture was stirred at 50 ˚C for 10 hours to give a polyimide precursor solution composition containing carbon black in an amount of 10 % by weight to the total amount of the polyimide precursor solution composition. The properties of this polyimide precursor solution composition are shown in Table 2.

(12-d) Method for preparing a fillercontaining_polyimide film

Using the polyimide precursor solution composition prepared in (12-c), a polyimide film was formed as described in (1-d). The results such as the properties of this polyimide film are shown in Table 2.

Example 13

(13-a) Preparation of a polyimide precursor solution composition before adding a filler

Prepared as described in (3-a), to give a polyimide precursor solution composition with a solid concentration of 17.9 % by weight and a solution viscosity of 50.5 Pa ·s.

(13-b) Method for preparing a filler-containing dispersion solution

To 520 g of DMAc, 30 g of Ketjen Black (Lion Corporation, Ketjen Black ECP-600JD, Volatiles: 0.7 % by weight) and 450 g of the polyimide precursor solution composition prepared as described above were added, and the mixture was mixed at room temperature for 16 hours using a ball mill (combination of balls with a diameter of 2 mm and 6 mm), to prepare a dispersion solution containing carbon black (3 % by weight carbon dispersion).

(13-c) Method for prepaying a filler-containing polyimide precursor solution composition

To a glass reaction vessel with an internal volume of 500 mL equipped with a stirrer and an inlet and an outlet tubes for nitrogen gas, 333.3 g of 3 % by weight carbon dispersion described above and 106.7 g of DMAc were added, and then 36.85 g of ODA (total: 0.202 mol) and 54.15 g of s-BPDA (total: 0.202 mol) were added. The mixture was stirred at 50 ˚C for 10 hours to give a polyimide precursor solution composition containing carbon black in an amount of 10 % by weight to the total amount of the polyimide precursor solution composition. The properties of this polyimide precursor solution composition are shown in Table 2.

(13-d) Method for preparing a filler-containing polyimide film

Using the polyimide precursor solution composition prepared in (13-c), a polyimide film was formed as described in (1-d). The results such as the properties of this polyimide film are shown in Table 2.

Example 14

(14-a) Preparation of a polyimide precursor solution composition before adding a filler

Prepared as described in (3-a), to give a polyimide precursor solution composition with a solid concentration of 17.9 % by weight and a solution viscosity of 50.5 Pa ·s.

(14-b) Method for preparing a filler-containin dispersion solution

To 575 g of DMAc, 50 g of Ketjen Black (Lion Corporation, Ketjen Black ECP-600JD, Volatiles: 0.7 % by weight) and 375 g of the polyimide precursor solution composition prepared in (14-a) were added, and the mixture was mixed at room temperature for 16 hours using a ball mill (combination of balls with a diameter of 2 mm and 6 mm), to prepare a dispersion solution containing carbon black (5 % by weight carbon dispersion).

(14-c) Method for preparing a filler-containing polyimide precursor solution composition

To a glass reaction vessel with an internal volume of 500 mL equipped with a stirrer and an inlet and an outlet tubes for nitrogen gas, 200.0 g of 5 % by weight carbon dispersion described above and 225.0 g of DMAc were added, and then 37.46 g of ODA (total: 0.202 mol) and 55.04 g of s-BPDA (total: 0.202 mol) were added. The mixture was stirred at 50 ˚C for 10 hours to give a polyimide precursor solution composition containing carbon black in an amount of 10 % by weight to the total amount of the polyimide precursor solution composition. The properties of this polyimide precursor solution composition are shown in Table 2.

(14-d) Method for preparing a filler-containing polyimide film

Using the polyimide precursor solution composition prepared in (14-c), a polyimide film was formed as described in (1-d). The results such as the properties of this polyimide film are shown in Table 2.

Example 15

(15-a) Preparation of a polyimide precursor solution composition before adding a filler

Prepared as described in (3-a), to give a polyimide precursor solution composition with a solid concentration of 17.9 % by weight and a solution viscosity of 50.5 Pa ·s.

(15-b) Preparation of a filler-containing dispersion solution

A filler-containing dispersion solution was prepared as described in (3-b) using the polyimide precursor solution composition prepared in (15-a) (3 % by weight carbon dispersion solution).

(15-c) Method for preparing a filler-containing polyimide precursor solution composition

To a glass reaction vessel with an internal volume of 500 mL equipped with a stirrer and an inlet and an outlet tubes for nitrogen gas, 166.7 g of 3 % by weight carbon dispersion described above and 245.8 g of DMAc were added, and then 53.88 g of BAPP (0.131 mol) and 38.62 g of s-BPDA (total: 0.146 mol). The mixture was stirred at 50 ˚C for 10 hours to give a polyimide precursor solution composition containing carbon black in an amount of 5 % by weight to the total amount of the polyimide precursor solution composition. The properties of this polyimide precursor solution composition are shown in Table 2.

(15-d) Method for preparing a filler-containing polyimide film

Using the polyimide precursor solution composition prepared in (15-c), a polyimide film was formed as described in (1-d). The results such as the properties of this polyimide film are shown in Table 2.

Example 16

(16-a) Preparation of a polyimide precursor solution composition before adding a filler

Prepared as described in (3-a), to give a polyimide precursor solution composition with a solid concentration of 17.9 % by weight and a solution viscosity of 50.5 Pa ·s.

(16-b) Prepation of a filler-containing dispersion solution

A filler-containing dispersion solution was prepared as described in (3-b) using the polyimide precursor solution composition prepared in (16-a) (3 % by weight carbon dispersion).

(16-c) Method for preparing__4_filler-containing polyimide precursor solution composition

To a glass reaction vessel with an internal volume of 500 mL equipped with a stirrer and an inlet and an outlet tubes for nitrogen gas, 166.7 g of 3 % by weight carbon dispersion described above and 245.8 g of DMAc were added, and then 24.92 g of ODA (total: 0.140 mol) and 15.27 g of MBAA (0.053 mol), and 52.31 g of s-BPDA (total: 0.193 mol) were added. The mixture was stirred at 50 ˚C for 10 hours to give a polyimide precursor solution composition containing carbon black in an amount of 5 % by weight to the total amount of the polyimide precursor solution composition. The properties of this polyimide precursor solution composition are shown in Table 2.

(16-d) Method for preparing a filler-containing polyimide film

Using the polyimide precursor solution composition prepared in (16-c), a polyimide film was formed as described in (1-d). The results such as the properties of this polyimide film are shown in Table 2.

Comparative Example 1

(1'-a) Method for preparing a filler-containing polyimide precursor solution composition

To a glass reaction vessel with an internal volume of 500 mL equipped with a stirrer and an inlet and an outlet tubes for nitrogen gas, 400 g of NMP as a solvent and 10 g of Ketjen Black (Lion Corporation, Ketjen Black ECP-600JD, Volatiles: 0.7 % by weight) were added. After stirring for 1 hour, to the mixture were added 40.50 g of ODA (0.202 mol) and 59.50 g of s-BPDA (0.202 mol), and then the mixture was stirred at 50 ˚C. for 10 hours to give a polyimide precursor solution composition containing carbon black in an amount of 10 % by weight to the total amount of the polyimide precursor solution composition. This polyimide precursor solution composition containing carbon black in an amount of 10 % by weight had a solid concentration of 20.3 % by weight and a solution viscosity of 50.5 Pa ·s, and its solution stability was evaluated as ×.
An initial aggregate had a size of 40 μm and an aggregate after 1 month had a size of 85 μm, and re-aggregation was observed, but after standing for additional 14 days, dispersion stability was evaluated as ○ (see Table 3).

(1'-b) Method for preparing a filler-containing polyimide film

A polyimide film was formed as described in (1-d) using the polyimide precursor solution composition prepared in (1'-a). The results such as the properties of this polyimide film are shown in Table 3.

Comparative Example 2

(2'-a) Method for preparing a filler-containing polyimide precursor solution composition

A polyimide precursor solution composition containing carbon fiber in an amount of 10 % by weight to the total amount of the polyimide precursor solution composition was prepared as described in (1'-a), substituting 10 g of AMC (Ube Industries, Ltd.) for Ketjen Black as a filler. The properties of the polyimide precursor solution composition are shown in Table 3.

(2'-b) Method for preparing a filler-containing polyimide film

A polyimide film was formed as described in (1-d) using the polyimide precursor solution composition prepared in (2'-a). The results such as the properties of this polyimide film are shown in Table 3.

Comparative Example 3

(3'-a) method for preparing a filler-containing polyimide precursor solution composition

A polyimide precursor solution composition containing boron nitride in an amount of 10 % by weight to the total amount of the polyimide precursor solution composition was prepared as described in (1'-a), substituting 10 g of boron nitride (Denki Kagaku Kogyo K.K., SP-2, average particle size: 4 $\mu$m) for Ketjen Black as a filler. The properties of the polyimide precursor solution composition are shown in Table 3.

(3'-b) Method for preparing a filler-cantaining polyimide film

A polyimide film was formed as described in (1-d) using the polyimide precursor solution composition prepared in (3'-a). The results such as the properties of this polyimide film are shown in Table 3.

Comparative Example 4

(4'-a) Method for preparing a filler-containing dispersion solution

To 745 g of NMP, 30 g of boron nitride (Denki Kagaku Kogyo K.K.. SP-2, average particle size: 4 $\mu$m) and 30 g of PVP (Nippon Shokubai Co., Ltd., K-30) were added, and the mixture was mixed at room temperature for 16 hours using a ball mill (combination of balls with a diameter of 2 mm and 6 mm), to prepare a dispersion solution containing boron nitride (3 % by weight boron nitride dispersion).

(4'-b) Method for prepaying a filler-containing polyimide precursor solution composition

To a glass reaction vessel with an internal volume of 500 mL equipped with a stirrer and an inlet and an outlet tubes for nitrogen gas, 333.3 g of 3 % by weight boron nitride dispersion described above and 151.7 g of NMP were added, and then 34.42 g of ODA (total: 0.202 mol) and 50.58 g of s-BPDA (total: 0.202 mol) were added. The mixture was stirred at 50 ˚C for 10 hours to give a polyimide precursor solution composition containing boron nitride in an amount of 10 % by weight to the total amount of the polyimide precursor solution composition. The properties of this polyimide precursor solution composition are shown in Table 3.

(4'-c) Method for preparing a filler-containing polyimide film

A polyimide film was formed as described in (1-d) using the polyimide precursor solution composition prepared in (4'-b). The results such as the properties of this polyimide film are shown in Table 3.

Comparative Example 5

(5'-a) Method for preparing a filler-containing polyimide precursor solution composition

To a glass reaction vessel with an internal volume of 500 mL equipped with a stirrer and an inlet and an outlet tubes for nitrogen gas, 400 g of NMP as a solvent was added, and then 40.50 g of ODA (0.202 mol) and 59.50 g of s-BPDA (0.202 mol) were added. The mixture was stirred at 50 ˚C, for 10 hours to give a polyimide precursor solution composition with a solid concentration of 18.5 % by weight and a solution viscosity of 195.0 Pa ·s. To the polyimide precursor solution composition, 5 g of Ketjen Black (Lion Corporation, Ketjen Black ECP-600JD, Volatiles: 0.7 % by weight) was added and then processed by a three-roll mill to give a polyimide precursor solution composition containing carbon black in an amount of 5 % by weight to the total amount of the polyimide precursor solution composition. The properties of the polyimide precursor solution composition are shown in Table 3.

(5'-b) Method for preparing a filler-containing polyimide film

A polyimide film was formed as described in (1-d) using the polyimide precursor solution composition prepared in (5'-a). The results such as the properties of this polyimide film are shown in Table 3.

Comparative Example 6

(6'-a) Method for preparing a filler-containing polyimide precursor solution composition

To a glass reaction vessel with an internal volume of 500 mL equipped with a stirrer and an inlet and an outlet tubes for nitrogen gas, 400 g of NMP as a solvent was added, and then 40.50 g of ODA (0.202 mol) and 59.50 g of s-BPDA (0.202 mol) were added. The mixture was stirred at 50 ˚C, for 10 hours to give a polyimide precursor solution composition with a solid concentration of 18.5 % by weight and a solution viscosity of 207.5 Pa ·s. To the polyimide precursor solution composition, 5 g of AMC (Ube Industries, Ltd.) was added and then processed by a three-roll mill to give a polyimide precursor solution composition containing carbon fiber in an amount of 5 % by weight to the total amount of the polyimide precursor solution composition. The properties of the polyimide precursor solution composition are shown in Table 3.

(6'-b) Method for preparing a filler-containing polyimide film

A polyimide film was formed as described in (1-d) using the polyimide precursor solution composition prepared in (6'-a). The results such as the properties of this polyimide film are shown in Table 3.

Comparative Example 7

(7'-a) Method for preparing a filler-containing dispersion solution

To 400 g of NMP, 10 g of AMC (Ube Industries, Ltd.) and 40.50 g of ODA (molecular weight: 200.26) (0.202 mol) were added, and the mixture was mixed using a ball mill (combination of balls with a diameter of 2 mm and 6 mm) at room temperature for 16 hours, to give a dispersion solution containing carbon fiber (2.2 % by weight carbon fiber dispersion).

(7'-b) Method for preparing a filler-containing polyimide precursor solution composition

In a glass reaction vessel with an internal volume of 500 mL equipped with a stirrer and an inlet and an outlet tubes for nitrogen gas, 59.50 g of s-BPDA (0.202 mol) was added to 450.5 g of the 2.2 % by weight carbon fiber dispersion prepared above, and the mixture was stirred at 50 ˚C for 10 hours, to give a polyimide precursor solution composition containing carbon fiber in an amount of 10 % by weight to the total of the polyimide precursor solution composition. The properties of the polyimide precursor solution composition are shown in Table 3.

(7'-c) Method for preparing a filler-containing polyimide film

A polyimide film was formed as described in (1-d) using the polyimide precursor solution composition prepared in (7'-b). The results such as the properties of this polyimide film are shown in Table 3.

Comparative Example 8

(8'-a) Method for preparing a filler-containing dispersion solution

To 400 g of NMP, 22.76 g of AMC (Ube Industries, Ltd.) and 32.51 g of lauryldimethylamine oxide (Kao Corporation, Amphitol 20N, active ingredient: 35%) were added, and the mixture was mixed using a ball mill (combination of balls with a diameter of 2 mm and 6 mm) at room temperature for 16 hours, to give a dispersion solution containing carbon fiber (5 % by weight carbon fiber dispersion).

(8'-b) Method for preparing a filler-containing polyimide precursor solution composition

In a glass reaction vessel with an internal volume of 500 mL equipped with a stirrer and an inlet and an outlet tubes for nitrogen gas, 40.50 g of ODA (0.202 mol) and 59.50 g of s-BPDA (0.202 mol) were added to 400 g of the 5 % by weight carbon fiber dispersion described above, and the mixture was stirred at 50 ˚C for 10 hours, to give a polyimide precursor solution composition containing carbon fiber in an amount of 10 % by weight to the total of the polyimide precursor solution composition. The properties of the polyimide precursor solution composition are shown in Table 3.

(8'-c) Method for preparing a filler-containing polyimide film

A polyimide film was formed as described in (1-d) using the polyimide precursor solution composition prepared in (8'-b). The results such as the properties of this polyimide film are shown in Table 3.

Comparative Example 9

(9'-a) Preparation of a polyimide precursor solution composition before adding a filler

Prepared as described in (3-a), to give a polyimide precursor solution composition with a solid concentration of 17.9 % by weight and a solution viscosity of 50.5 Pa ·s.

(9'-b) Method for preparing a filler-containing dispersion solution

To 932.5 g of DMAc, 30 g of Ketjen Black (Lion Corporation, Ketjen Black ECP-600JD, Volatiles: 0.7 % by weight) were added and 37.5 g of the polyimide precursor solution composition prepared above, and then the mixture was mixed using a ball mill (combination of balls with a diameter of 2 mm and 6 mm) at room temperature for 16 hours, to give a dispersion solution containing carbon black (3 % by weight carbon dispersion).

(9'-c) Method for preparing a filler-containing polyimide precursor solution composition

To a glass reaction vessel with an internal volume of 500 mL equipped with a stirrer and an inlet and an outlet tubes for nitrogen gas, 333.3 g of 3 % by weight carbon dispersion described above and 79.2 g of DMAc were added, and then 40.20 g of ODA (total: 0.202 mol) and 59.05 g of s-BPDA (total: 0.202 mol) were added. The mixture was stirred at 50 ˚C for 10 hours to give a polyimide precursor solution composition containing carbon black in an amount of 10 % by weight to the total amount of the polyimide precursor solution composition. The properties of this polyimide precursor solution composition are shown in Table 3.

(9'-d) Method for preparing a filler-containing polyimide film

A polyimide film was formed as described in (1-d) using the polyimide precursor solution composition prepared in (9'-c). The results such as the properties of this polyimide film are shown in Table 3.

Comparative Example 10

(10'-a) Preparation of a polyimide precursor solution composition before wadding a filler

Prepared as described in (3-a), to give a polyimide precursor solution composition with a solid concentration of 17.9 % by weight and a solution viscosity of 50.5 Pa ·s.

(10'-b) Method for preparing a filler-containing dispersion solution

To 220 g of DMAc, 30 g of Ketjen Black (Lion Corporation, Ketjen Black ECP-600JD, Volatiles: 0.7 % by weight) and 750 g of the polyimide precursor solution composition prepared above were added, and the mixture was mixed using a ball mill (combination of balls with a diameter of 2 mm and 6 mm) at room temperature for 16 hours, to give a dispersion solution containing carbon black (3 % by weight carbon dispersion).

(10'-c) Method for preparing a filler-containing polyimide precursor solution composition

To a glass reaction vessel with an internal volume of 500 mL equipped with a stirrer and an inlet and an outlet tubes for nitrogen gas, 333.3 g of 3 % by weight carbon dispersion described above and 126.7 g of DMAc were added, and then 34.42 g of ODA (total: 0.202 mol) and 50.58 g of s-BPDA (total: 0.202 mol) were added. The mixture was stirred at 50 ˚C for 10 hours to give a polyimide precursor solution composition containing carbon black in an amount of 10 % by weight to the total amount of the polyimide precursor solution composition. The properties of this polyimide precursor solution composition are shown in Table 3.

(10'-d) Method for preparing a filler-containing polyimide film

A polyimide film was formed as described in (1-d) using the polyimide precursor solution composition prepared in (10'-c). The results such as the properties of this polyimide film are shown in Table 3.

Table 1

| | | Ex. 1 | Ex.2 | Ex.3 | Ex.4 | Ex.5 | Ex.6 | Ex.7 | Ex.8 |
|---|---|---|---|---|---|---|---|---|---|
| Composition of a polyimide precursor solution containing a filler | | | | | | | | | |
| Acid | s-BPDA(mol%) | 100 | 100 | 100 | 100 | 1.0 | 100 | 100 | 100 |
| Diamine | PPD (mol%) | | | | | | | | |
| | ODA (mol%) | 100 | 100 | 100 | 100 | 100 | 100 | 100 | 100 |
| | BAPP (mol%) | | | | | | | | |
| | MBAA (mol%) | | | | | | | | |
| Solvent | NMP (wt%) | 100 | 100 | | 100 | 100 | 100 | 100 | 100 |
| | DMAc (wit%) | | | 100 | | | | | |
| Filler | Ketjen Black (wt%) | 5 | 10 | 10 | 15 | | | | |
| | AMC (wt%) | | | | | 5 | 10 | | |
| | Furnace black (wt%) | | | | | | | 10 | |
| | Boron nitride (wt%) | | | | | | | | |
| | Silica (wot%) | | | | | | | | |
| Filler concentration in a dispersion (wt%) | | 3 | 3 | 3 | 3 | 3 | 3 | 3 | 3 |
| Polyimide precursor concentration in a dispersion (wt%) | | 4.5 | 4.5 | 4.5 | 4.5 | 4.5 | 4.5 | 4.5 | 4.5 |
| Properties of a polyimide precursor solution composition containing a filler | | | | | | | | | |
| | Solid concentration (wot%) | 19.2 | 20.2 | 20.1 | 21.0 | 19.4 | 20.4 | 20.2 | 20.5 |
| | Solution viscosity (Pa ·s) | 50.5 | 51.0 | 49.8 | 51.0 | 52.5 | 49.5 | 51.3 | 49.0 |
| | Solution stability | ○ | ○ | ○ | ○ | ○ | ○ | ○ | ○ |
| | Aggregate size (initiaD(μm) | 10 | 15 | 20 | 20 | 15 | 20 | 5 | 30 |
| | Aggregate size (after 1 month)(μm) | 12 | 17 | 20 | 20 | 15 | 22 | 5 | 30 |
| | Re-aggregation | None | None | None | None | None | None | None | None |
| | Dispersion stability | ○ | ○ | ○ | ○ | ○ | ○ | ○ | ○ |

EP 2 450 408 A1

(continued)

| Properties of a polyimide film | | | | | | | | | |
|---|---|---|---|---|---|---|---|---|---|
| | Film thickness ($\mu$m) | 50 | 50 | 50 | 50 | 50 | 50 | 50 | 50 |
| | Tensile strength (MPa) | 212 | 152 | 145 | 144 | 211 | 208 | 140 | 125 |
| | Elongation (%) | 77 | 40 | 30 | 24 | 83 | 69 | 35 | 32 |
| | Tensile elastic modulus (GPa) | 3.8 | 4.1 | 4.4 | 4.2 | 4.2 | 4.6 | 3.8 | 3.9 |
| | Surface resistivity ($\Omega$) | $7.8\times10^3$ | $8.2\times10^2$ | $4.6\times10^2$ | $2.8\times10^2$ | $1.0\times10^3$ | $7.4\times10^2$ | - | - |
| | Volume resistivity ($\Omega$cm) | $3.9\times10^1$ | $4.1\times10^0$ | $2.3\times10^0$ | $1.4\times10^0$ | $5.0\times10^0$ | $3.7\times10^0$ | - | - |

EP 2 450 408 A1

Table 2

| | | Ex.9 | Ex.10 | Ex.11 | Ex.12 | Ex.13 | Ex,14 | Ex.15 | Ex.16 |
|---|---|---|---|---|---|---|---|---|---|
| Composition of a polyimide precursor solution containing a filler | | | | | | | | | |
| Acid | s-BPDA (mol%) | 100 | 100 | 100 | 100 | 100 | 100 | 100 | 100 |
| Diamine | PPD (mol%) | | 12 | 12 | | | | | |
| | ODA (mol%) | 100 | 88 | 88 | 100 | 100 | 100 | 10 | 70 |
| | BAPP (mol%) | | | | | | | 90 | |
| | MBAA (mol%) | | | | | | | | 30 |
| Solvent | NMP (wt%) | 100 | 100 | | | | | | |
| | DMAc (wt%) | | | 100 | 100 | 100 | 100 | 100 | 100 |
| Filler | Ketjen Black (wt%) | | 10 | 10 | 10 | 10 | 10 | 5 | 5 |
| | AMC (wt%) | | | | | | | | |
| | Furnace black (wt%) | | | | | | | | |
| | Boron nitride (wt%) | | | | | | | | |
| | Silica (wt%) | 10 | | | | | | | |
| Filler concentration in a dispersion (wt%) | | 3 | 3 | 3 | 3 | 3 | 5 | 3 | 3 |
| Polyimide precursor concentration in a dispersion (wt%) | | 4.5 | 4.5 | 4.5 | 1.5 | 9.0 | 7.5 | 4.5 | 4.5 |
| Properties of a polyimide precursor solution containing a filler | | | | | | | | | |
| | Solid concentration (wt%) | 21.2 | 19.8 | 19.6 | 20.3 | 20.0 | 20.8 | 19.5 | 19.3 |
| | Solution viscosity (Pa ·s) | 52.2 | 50.4 | 51.2 | 48.9 | 50.3 | 52.4 | 102.4 | 82.5 |
| | Solution stability | ○ | ○ | ○ | ○ | ○ | ○ | ○ | ○ |
| | Aggregate size (initial)($\mu$m) | 6 | 10 | 8 | 17 | 24 | 35 | 5 | 6 |
| | Aggregate size (after 1 month) ($\mu$m) | 7 | 11 | 8 | 18 | 25 | 37 | 5 | 6 |
| | Re-aggregation | None | None | None | None | None | None | None | None |
| | Dispersion stability | ○ | ○ | ○ | ○ | ○ | ○ | ○ | ○ |

(continued)

Properties of a polyimide film

| | | | | | | | | |
|---|---|---|---|---|---|---|---|---|
| Film thickness (μm) | 50 | 50 | 50 | 50 | 50 | 50 | 50 | 50 |
| Tensile strength (MPa) | 135 | 160 | 155 | 151 | 149 | 149 | 185 | 155 |
| Elongation (%) | 38 | 36 | 35 | 32 | 33 | 33 | 80 | 74 |
| Tensile elastic modulus (GPa) | 3.8 | 4.8 | 4.6 | 4.4 | 4.3 | 4.3 | 3.5 | 3.8 |
| Surface resistivity (Ω) | - | $5.7 \times 10^2$ | $4.8 \times 10^2$ | $.8 \times 10^2$ | $4.4 \times 10^2$ | $3.9 \times 10^2$ | $4.6 \times 10^3$ | $6.4 \times 10^3$ |
| Volume resistivity (Ωcm) | - | $2.9 \times 10^0$ | $2.4 \times 10^0$ | $2.4 \times 10^0$ | $2.2 \times 10^0$ | $2.0 \times 10^0$ | $2.3 \times 10^1$ | $3.2 \times 10^1$ |

EP 2 450 408 A1

Table 3

| | | Comp. Ex.1 | Comp. Ex.2 | Comp. Ex.3 | Comp. Ex.4 | Comp. Ex.5 | Comp. Ex.6 | Comp. Ex.7 | Comp. Ex.8 | Comp. Ex.9 | Comp. Ex.10 |
|---|---|---|---|---|---|---|---|---|---|---|---|
| Composition of a polyimide precursor solution filler | | | | | | | | | | | |
| Acid | containing a s-BPDA (mol%) | 100 | 100 | 100 | 100 | 100 | 100 | 100 | 100 | 100 | 100 |
| Diamine | PPD (mol%) | | | | | | | | | | |
| | ODA (mol%) | 100 | 100 | 100 | 100 | 100 | 100 | 100 | 100 | 100 | 100 |
| Solvent | NMP (wt%) | 100 | 100 | 100 | 100 | 100 | 100 | 100 | 100 | | |
| | DMAc (wt%) | | | | | | | | | 100 | 100 |
| Filler | Ketjen Black (wt%) | 10 | | | | 5 | | | | 10 | 10 |
| | AMC (wt%) | | 10 | | | | 5 | 10 | 10 | | |
| | Furnace black (wt%) | | | | | | | | | | |
| | Boron nitride (wt%) | | | 10 | 10 | | | | | | |
| | Silica (wt%) | | | | | | | | | | |
| Filler concentration in a dispersion (wt%) | | - | - | - | 3 | - | - | 2 | 5 | 3 | 3 |
| Polyimide precursor concentration in a dispersion (wt%) | | - | - | - | None | - | - | None | None | 0.75 | 15.0 |

28

(continued)

| Properties of a polyimide precursor solution composition containing a filler Solid | | | | | | | | | | |
|---|---|---|---|---|---|---|---|---|---|---|
| concentration (wt%) | 20.3 | 20.5 | 20.4 | 21.0 | 19.4 | 19.4 | 19.5 | 20.4 | 20.3 | 20.1 |
| Solution viscosity (Pa·s) | 50.5 | 51.0 | 49.8 | 51.0 | 235.0 | 255.0 | 48.9 | 50.3 | 49.7 | 50.7 |
| Solution stability | × | × | × | × | × | × | × | × | ○ | × |
| Aggregate size (initial)(μm) | 40 | 55 | 45 | 15 | 45 | 85 | ≥100 | 5 | 65 | 80 |
| Aggregate size (after 1 month) (μm) | 85 | 100 | 60 | 25 | 60 | 100 | ≥100 | ≥100 | 80 | ≥100 |
| Re-aggregation | Obsvd. | Obsvd. | Obsvd. | Obsvd. | Obsvd. | Obsvd. | Cannot obsvd. | Obsvd. | Obsvd. | Obsvd. |
| Dispersion stability | ○ | ○ | ○ | ○ | ○ | ○ | × | × | × | × |
| Properties of a polyimide film | | | | | | | | | | |
| Film thickness (μm) | 50 | 50 | 50 | 50 | 50 | 50 | 50 | 50 | 50 | 50 |
| Tensile strength (MPa) | 115 | 125 | 112 | 102 | 108 | 128 | 110 | 138 | 140 | 135 |
| Elongation (%) | 8 | 12 | 4 | 15 | 4 | 6 | 8 | 18 | 20 | 12 |

(continued)

| Properties of a polyimide film | | | | | | | | | | | |
|---|---|---|---|---|---|---|---|---|---|---|---|
| | Tensile elastic modulus (GPa) elastic modulus | 4.2 | 4.3 | 4.0 | 3.8 | 4.3 | 4.4 | 4.2 | 4.0 | 4.4 | 4.4 |
| | Surface resistivity ($\Omega$) | $3.0\times10^2$ | $7.0\times10^2$ | - | - | $2.4\times10^3$ | $4.2\times10^3$ | $8.4\times10^3$ | $0.8\times10^3$ | $4.4\times10^2$ | $3.8\times10^2$ |
| | Volume resistivity ($\Omega$cm) | $1.5\times10^0$ | $3.5\times10^0$ | - | - | $1.2\times10^1$ | $2.1\times10^1$ | $4.2\times10^1$ | $3.4\times10^1$ | $2.2\times10^0$ | $1.9\times10^0$ |

From the above results, a filler-containing polyimide precursor solution composition prepared using a polyimide precursor solution composition as a dispersant exhibits high solution stability and dispersion stability without re-aggregation and precipitation. A filler-containing polyimide film prepared from a filler-containing polyimide precursor solution composition with good dispersion stability exhibited good mechanical and electric properties.

A polyimide precursor solution composition without a dispersant or containing an amino compound or a surfactant as a dispersant exhibited bad solution stability and very bad dispersion stability as indicated by re-aggregation and precipitation. Furthermore, mechanical properties were deteriorated in a filler-containing polyimide film prepared from a filler-containing polyimide precursor solution composition with bad dispersion stability.

INDUSTRIAL USABILITY

A polyimide prepared from a filler-containing polyimide precursor solution composition of this invention can be used for, for example, an electrophotographic copying machine; a fixing belt and an intermediate transfer belt in an electrophotographic image-forming machine such as a printer and a facsimile; and a binder, a coating agent and a collector for a lithium-ion secondary battery.

Description of symbols

11: structural unit
12: head-top part
13: body-part
21: aggregate

**Claims**

1. A filler-containing dispersion solution wherein a filler is dispersed in a solvent using a polyimide precursor solution composition.

2. The filler-containing dispersion solution according to Claim 1, wherein a concentration of the filler is 1 to 7 % by weight to the total weight of the filler-containing dispersion solution.

3. The filler-containing dispersion solution according to Claim 1 or 2, wherein one or more electron- and/or heat-conductive fillers is used as a filler.

4. The filler-containing dispersion solution according to any one of Claims 1 to 3, wherein a concentration of the polyimide precursor in the filler-containing dispersion solution is 50 to 300 % by weight to a filler concentration.

5. A filler-containing polyimide precursor solution composition prepared by dissolving a tetracarboxylic dianhydride and/or its derivative and a diamine compound in a filler-containing dispersion solution according to any one of Claims 1 to 4 and polymerizing them.

6. A polyimide prepared using the filler-containing polyimide precursor solution composition according to Claim 5.

7. A process for manufacturing a polyimide film using a filler-containing polyimide precursor solution composition prepared by dissolving a tetracarboxylic dianhydride and/or its derivative and a diamine compound in a filler-containing dispersion solution, wherein the filler is dispersed in a solvent using a polyimide precursor solution composition to prepare said filler-containing dispersion solution.

8. A process for manufacturing a polyimide in which a filler is dispersed, comprising:

   mixing a filler and a polyimide precursor solution composition in a solvent to prepare a filler-containing dispersion solution; and
   mixing said filler-containing dispersion solution, a solvent, a tetracarboxylic dianhydride and/or its derivative and a diamine compound for initiating a reaction of a tetracarboxylic dianhydride and/or its derivative with a diamine compound to prepare a filler-containing polyimide precursor solution composition.

FIG. 1

(a)

(b)

## INTERNATIONAL SEARCH REPORT

| International application No. |
|---|
| PCT/JP2010/060998 |

A. CLASSIFICATION OF SUBJECT MATTER
*C08L79/08*(2006.01)i, *C08G73/10*(2006.01)i, *C08K3/00*(2006.01)i

According to International Patent Classification (IPC) or to both national classification and IPC

B. FIELDS SEARCHED

Minimum documentation searched (classification system followed by classification symbols)
C08L1/00-101/16, C08G73/00-73/26, C08K3/00-13/08

Documentation searched other than minimum documentation to the extent that such documents are included in the fields searched
| Jitsuyo Shinan Koho | 1922-1996 | Jitsuyo Shinan Toroku Koho | 1996-2010 |
| Kokai Jitsuyo Shinan Koho | 1971-2010 | Toroku Jitsuyo Shinan Koho | 1994-2010 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | JP 2005-247987 A  (Gunze Ltd.),<br>15 September 2005 (15.09.2005),<br>claims 1 to 9; paragraph [0063]<br>& US 2007/0178264 A1   & EP 1721924 A1<br>& WO 2005/085324 A    & HK 1105650 A | 1-6<br>7-8 |
| X<br>Y | JP 2004-059694 A  (Kaneka Corp.),<br>26 February 2004 (26.02.2004),<br>claims 1 to 7; examples<br>(Family: none) | 1-6<br>7-8 |
| X<br>Y | JP 2005-248064 A  (Nitto Denko Corp.),<br>15 September 2005 (15.09.2005),<br>claims 1 to 4; paragraph [0023]; examples<br>(Family: none) | 1-6<br>7-8 |

| ☒ | Further documents are listed in the continuation of Box C. | ☐ | See patent family annex. |

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search<br>14 September, 2010 (14.09.10) | Date of mailing of the international search report<br>28 September, 2010 (28.09.10) |
|---|---|
| Name and mailing address of the ISA/<br>Japanese Patent Office | Authorized officer |
| Facsimile No. | Telephone No. |

Form PCT/ISA/210 (second sheet) (July 2009)

**INTERNATIONAL SEARCH REPORT**

International application No.

PCT/JP2010/060998

C (Continuation).   DOCUMENTS CONSIDERED TO BE RELEVANT

| Category* | Citation of document, with indication, where appropriate, of the relevant passages | Relevant to claim No. |
|---|---|---|
| Y<br>A | JP 2008-116838 A  (Fuji Xerox Co., Ltd.),<br>22 May 2008 (22.05.2008),<br>paragraphs [0048] to [0063]<br>(Family: none) | 7-8<br>1-6 |
| Y<br>A | JP 2009-025625 A  (Ricoh Co., Ltd.),<br>05 February 2009 (05.02.2009),<br>paragraph [0050]<br>(Family: none) | 7-8<br>1-6 |
| Y<br>A | JP 2005-220248 A  (Murata Mfg. Co., Ltd.),<br>18 August 2005 (18.08.2005),<br>paragraph [0024]<br>(Family: none) | 7-8<br>1-6 |

Form PCT/ISA/210 (continuation of second sheet) (July 2009)

**INTERNATIONAL SEARCH REPORT**

International application No.

PCT/JP2010/060998

| | |
|---|---|
| **Box No. II** | **Observations where certain claims were found unsearchable (Continuation of item 2 of first sheet)** |

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

| | |
|---|---|
| **Box No. III** | **Observations where unity of invention is lacking (Continuation of item 3 of first sheet)** |

This International Searching Authority found multiple inventions in this international application, as follows:

    Although the invention in claim 1 pertains to "dispersion solution", this
matter is publicly known as described in the following document.

    JP 2005-247987 A, 15 September 2005 (15.09.2005)

    Consequently, the inventions concerning respective compounds involved in
claims 1 - 8 do not have any "special technical feature" and have no technical
relationship involving one or more same or corresponding special technical
feature, and therefore cannot be considered to be linked as to form a single
general inventive concept.

1. ☐ As all required additional search fees were timely paid by the applicant, this international search report covers all searchable claims.

2. ☒ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant.   Consequently, this international search report is restricted to the invention first mentioned in the claims; it is covered by claims Nos.:

**Remark on Protest**   ☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007146042 A
- JP 2007302769 A